# EUROPÄISCHE PATENTSCHRIFT

(11) **EP 1 912 853 B1**
(45) Veröffentlichungstag und Bekanntmachung des Hinweises auf die Patenterteilung: **02.05.2012**
(21) Anmeldenummer: 06761808.2
(22) Anmeldetag: 14.07.2006
(51) Int. Cl.: B62D 65/06, B23Q 3/18, B60J 7/14, B60J 1/00

(54) **MONTAGEVERFAHREN UND MONTAGEAUFNAHME FÜR CABRIOLET-DÄCHER**
INSTALLATION METHOD AND INSTALLATION RECEPTACLE FOR CABRIOLET ROOFS
PROCEDE DE MONTAGE ET LOGEMENT DE MONTAGE POUR TOITS DE CABRIOLETS

(30) Priorität: 02.08.2005 DE 102005036243
(43) Veröffentlichungstag der Anmeldung: 23.04.2008
(73) Patentinhaber: Webasto AG, 82131 Stockdorf (DE)
(72) Erfinder: HÄLKER, Jörg, 49565 Bramsche (DE); DREISING, Johannes, Novi, MI 48374 (US); PAUL, Lothar, 49082 Osnabrück (DE)
(74) Vertreter: Grünberg, Thomas
(86) Internationale Anmeldenummer: PCT/DE2006/001230
(87) Internationale Veröffentlichungsnummer: WO 2007/014541

(56) Entgegenhaltungen:
- EP-A- 1 160 109
- WO-A-03/020543
- DE-A1- 4 005 884
- DE-A1- 10 028 405
- DE-A1- 10 337 460
- DE-C1- 4 038 074

## Beschreibung

Die Erfindung betrifft ein Verfahren zur Herstellung von Cabriolet-Dächern und ein Dachmontagewerkzeug

Bei der Herstellung von Cabriolet-Dächern ist es erforderlich, eine hohe Maßgenauigkeit einzuhalten, um den Einsatz des Daches in den Karosserierohbau passgenau - und damit auch zeitsparend in der laufenden Produktion - durchführen zu können.

Aufgrund der von den Dächern zu überspannenden Innenräume und die Vielzahl von gegeneinander beweglichen Teilen ist dies jedoch schwierig, so dass es zumeist erforderlich ist, eine Ausrichtung des Daches bei seinem Einsatz am Karosserierohbau vorzunehmen und gegebenenfalls Toleranzen durch Zwischensetzen von Unterlegscheiben oder ähnliche toleranzausgleichende Maßnahmen zwischen Karosserie und Dach auszugleichen. Zudem ist bei Dächern mit zumindest einer Scheibe, etwa einer Heckscheibe, schon eine hohe.Ungenauigkeit in der Scheibenherstellung zu berücksichtigen, die bei einer üblichen Glasheckscheibe durchaus zwei Millimeter ausmachen kann.

Aus der Druckschrift EP 1 160 109 A1 ist ein Cabriolet-Dach bekannt, das eine Heckscheibe aufweist, die über eine Kleberaupe an einen Scheibenrahmen angebunden ist.

Aus der Druckschrift WO 03/020543 A1 ist ein als so genanntes Hardtop ausgebildetes Cabriolet-Verdeck bekannt, das ein vorderes Dachteil und ein hinteres Dachteil umfasst, in welches eine Heckscheibe integriert ist. Über eine Dachkinematik ist das Verdeck beweglich an einem Hauptlager gehalten, das an einem im Heckbereich des betreffenden Fahrzeugs integrierten Tragrahmen befestigt ist.

Der Erfindung liegt das Problem zugrunde, die Herstellung von Cabriolet-Dächern, die eine oder mehrere Scheiben enthalten, zu verbessern.

Die Erfindung löst dieses Problem durch ein Verfahren mit den Merkmalen des Anspruchs 1 sowie durch ein Dachmontagewerk-zeug mit den Merkmalen des Anspruchs 7 Hinsichtlich vorteilhafter Ausgestaltungen der Erfindung wird auf die weiteren Ansprüche 2 bis 6 und 8 bis 20 verwiesen.

Mit dem erfindungsgemäßen Verfahren ist eine passgenaue und stets gleiche Ausrichtung der Scheibe zu einem sie in Verbindungsstellung unterstützenden Rahmenteil des Daches ermöglicht. Die Ausrichtung der Teile findet nicht manuell statt, so dass diesbezügliche Montageungenauigkeiten vermieden sind. Der Abstand zwischen den beiden Teilen ist durch die beiden fest zueinander stehenden Aufnahmeebenen vorgegeben und immer gleich.

Insbesondere können der Scheibe auf der ersten Auflageebene Schubglieder derart zugeordnet sein, dass diese die Scheibe gegen einen Anschlag ausrichten, wobei der Schubweg abhängig von der Erstreckung der jeweiligen Scheibe ist. Damit können durch die unterschiedlichen Schubwege Toleranzen der Scheibengröße ausgeglichen werden, wobei dennoch durch den Schub gegen den Anschlag eine stets gleiche Lage einer jeden Scheibe an zumindest einer Kante gesichert ist.

Besonders günstig ist es auch, wenn der Abstand zwischen den beiden Auflageebenen so eingestellt wird, dass eine aufgebrachte Kleberaupe definiert gequetscht wird und damit an jeder Stelle dichten Kontakt zur Scheibe und zu dem Rahmenteil hat. Dennoch ist dadurch, dass die Teile in den Aufnahmeebenen fest abgestützt sind, sichergestellt, dass zu keinem Zeitpunkt die volle Gewichtskraft eines der Teile auf der Kleberaupe lastet. Hierfür ist es hilfreich, wenn die so miteinander verbundene(n) Scheibe(n) und Rahmenteil(e) in diesen Ebenen verbleiben und darin definiert verfahrbar und einem weiteren Dachmontagewerkzeug zuführbar sind. Der Kleber hat dann eine längere Zeitdauer zur Aushärtung zur Verfügung, ehe die so verbundenen Teile erstmals relativ gegeneinander bewegt werden.

Mit der Erfindung kann auch ein mehrteiliges Dach montiert werden, das beispielsweise einen Rahmenteil für die Heckscheibe und einen in Fahrtrichtung vorgeordneten Rahmenteil umfasst, der ein festes Dachteil tragen kann oder gemeinsam mit dem Heckscheibenrahmen von einem Bezug überspannt sein kann. Die beiden Rahmenteile können dabei unter einem Winkel montiert werden, der ihrer Winkelstellung bei geschlossenem Dach genau entspricht. Alle Anbauteile, wie auch vordere Verschlussteile oder seitliche Gestängeteile sind daran in Über-Kopf-Lage anmontierbar.

Eine Verbindung der Rahmenteile mit seitlichen Gestängen, die von oben zugeführt werden, erfolgt in einer ergonomisch günstigen und wenig belastenden Arbeitshaltung des Bedienungspersonals. Diese Gestängeteile können günstig in einem oberen Träger eines Dachmontagewerkzeugs toleranzfrei entsprechend den Karosseriemaßen positioniert sein und durch Abwärtsbewegung dieses Trägers exakt in eine Relativlage gegenüber den Rahmenteilen bewegt werden, in der sie auch bei später fertig montiertem Dach stehen. Es bedarf dann keinerlei Toleranzausgleiches mehr bei der Montage des Daches an dem Karosserierohbau. Vielmehr ist bei einem hier dargestellten Verfahren ein möglicher Toleranzausgleich innerhalb des montierten Daches möglich: Zwischen den Gestängeteilen einerseits und den Rahmenteilen mit anmontierten Scheiben andererseits sind unterschiedlich dicke Pakete von Zwischenscheiben montierbar, die neben der Dickenanpassbarkeit zusätzlich auch noch Langlöcher aufweisen und damit in zwei Raumrichtungen Toleranzen ausgleichen können. In der dritten Raumrichtung ist hingegen kein Toleranzausgleich erforderlich, da in dem Werkzeug oberer und unterer Träger auf einen genau passenden Vertikalabstand aufeinander zu bewegbar sind.

Vorteilhaft können in der fest ausgerichteten Halterung der Rahmenteile auch noch vordere Verbindungsorgane mittels einer Schwenk- oder ähnlich beweglichen Schablone an das vordere Dachende automatisiert ausgerichtet angesetzt werden. Damit ist die Aushärtungsdauer für den Kleber vor Entnahme von Scheibe(n) und Rahmenteil(en) weiter verlängert; das Dach kann in vollständig montierter Stellung passgenau gegenüber der Karosserie dem Werkzeug entnommen werden.

Das Werkzeug zur Verbindung von Scheibe(n) und Rahmenteil(en) mit definiert beabstandeter Halterung der Teile, das Dachmontagewerkzeug zur Zuführung der das Dach später haltenden seitlichen Gestängeteile und das Dachverschlussmontagewerkzeug zur automatisch ausgerichteten Anbringung der Verbindungsglieder der Dachspitze sind ebenfalls Bestandteil der Anmeldung und mit beansprucht.

Weitere Vorteile und Merkmale der Erfindung ergeben sich aus einem in der Zeichnung schematisch dargestellten und nachfolgend beschriebenen Ausführungsbeispiel des Gegenstandes der Erfindung.

In der Zeichnung zeigt:
- Fig. 1 bis Fig. 4:: einen schematischen Ablauf eines Teiles des erfindungsgemäßen Verfahrens, darin:
- Fig. 1: das Einlegen von zwei später die Dachaußenhaut bildenden Scheiben in ein zwei Aufnahmeebenen bereitstellendes Werkzeug,
- Fig. 2: die Ausrichtung der hinteren Scheibe durch randseitige Schubglieder,
- Fig. 3: das Aufsetzen von mit Kleberaupen versehenen Rahmenteilen auf die zweite Aufnahmeebene,
- Fig. 4: das Heranführen von seitlichen Gestängeteilen an die mit den Scheiben verbundenen Rahmenteile,
- Fig. 5: eine perspektivische Ansicht des in Fig. 1 schematisch dargestellten Werkzeugs vor seiner Bestückung mit Teilen des Daches,

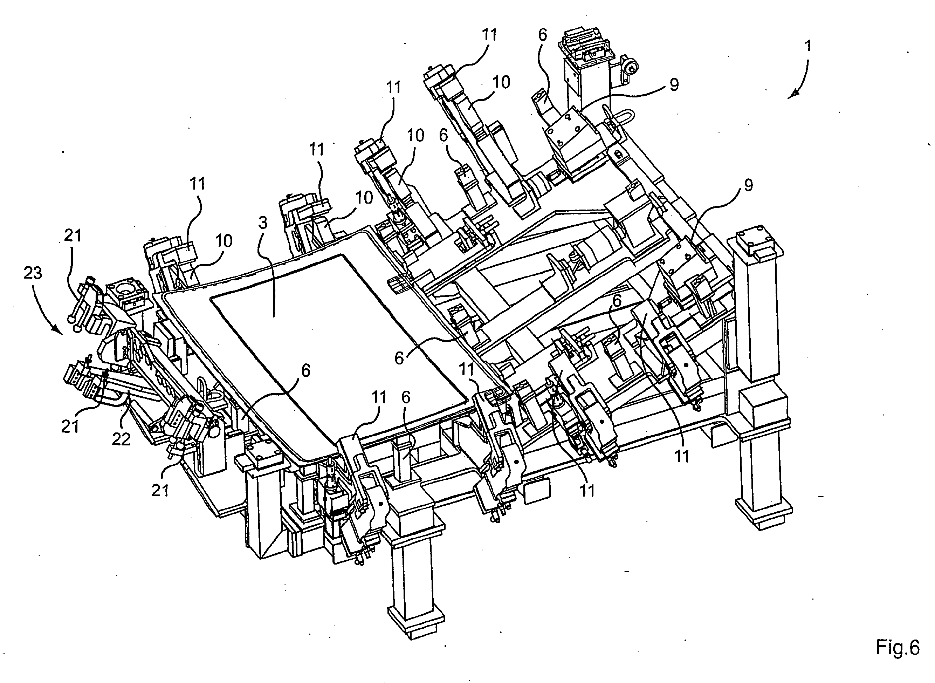

- Fig. 6: eine ähnliche Ansicht wie Fig. 5 nach Belegung eines Teils des Werkzeug mit einer später einen Insassenraum übergreifenden Scheibe des Daches,

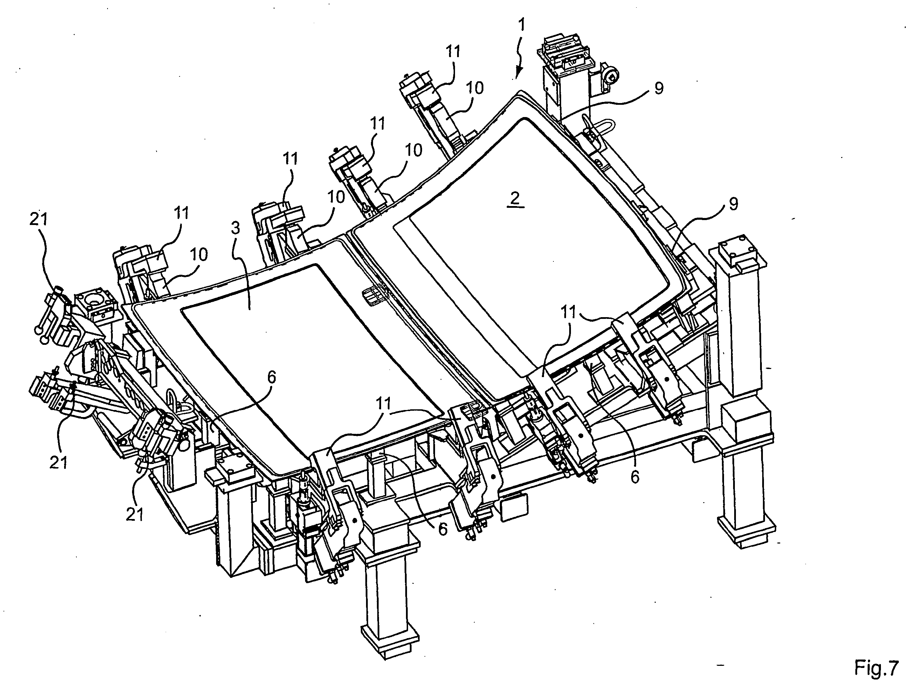

- Fig. 7: eine ähnliche Ansicht wie Fig. 6 mit zusätzlich in die erste Aufnahmeebene eingelegter und über Schubglieder ausgerichteter zweiter Scheibe, etwa entsprechend der Stellung nach Fig. 3,

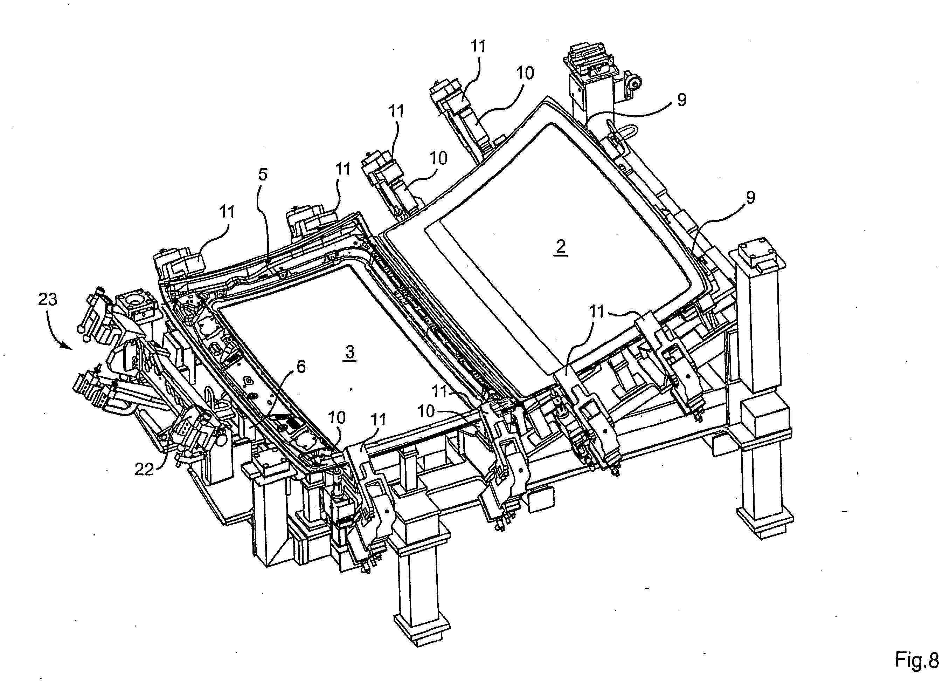

- Fig. 8: eine ähnliche Ansicht wie Fig. 7 mit einem auf die zweite Auflageebene aufgelegtem Rahmenteil, das mit der ersten Scheibe verklebt wird,

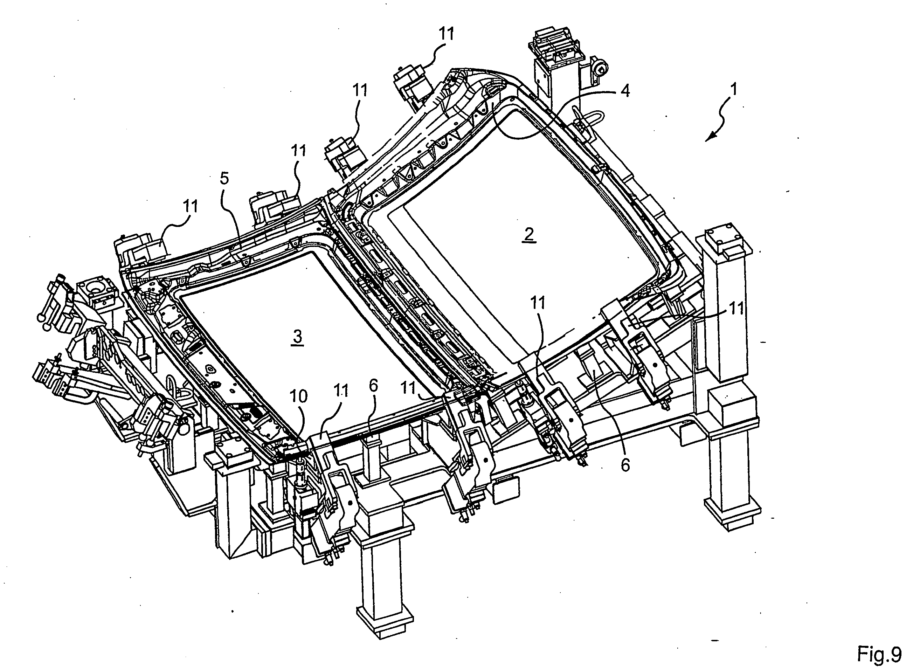

- Fig. 9: eine ähnliche Ansicht wie Fig. 8 mit auch über der Heckscheibe auf die zweite Aufnahmeebene zur Klebung aufgelegtem Rahmenteil,

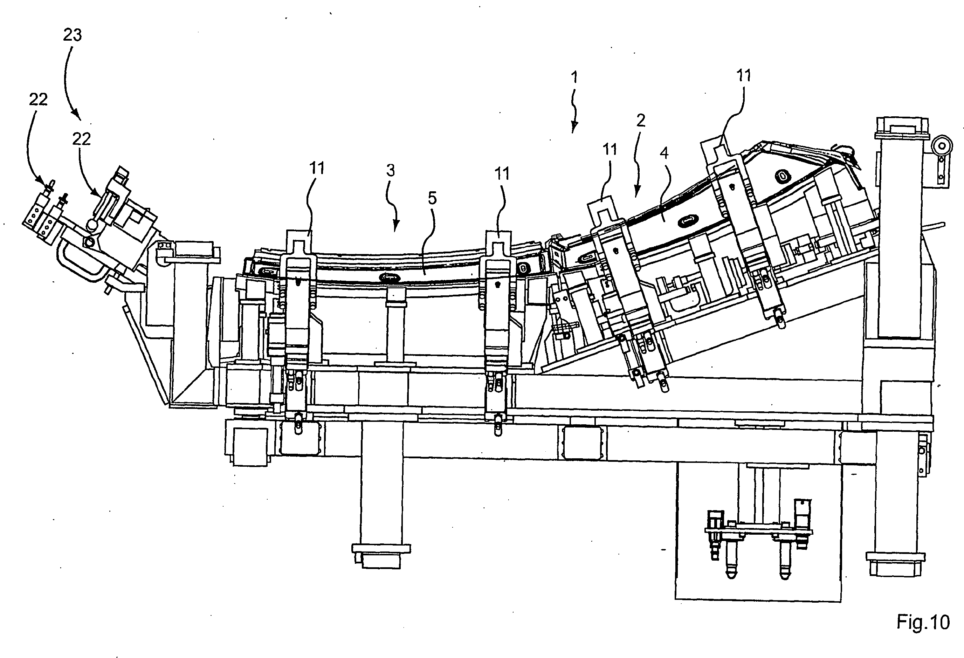

- Fig. 10: das nach Fig. 9 bestückte Werkzeug in Seitenansicht,

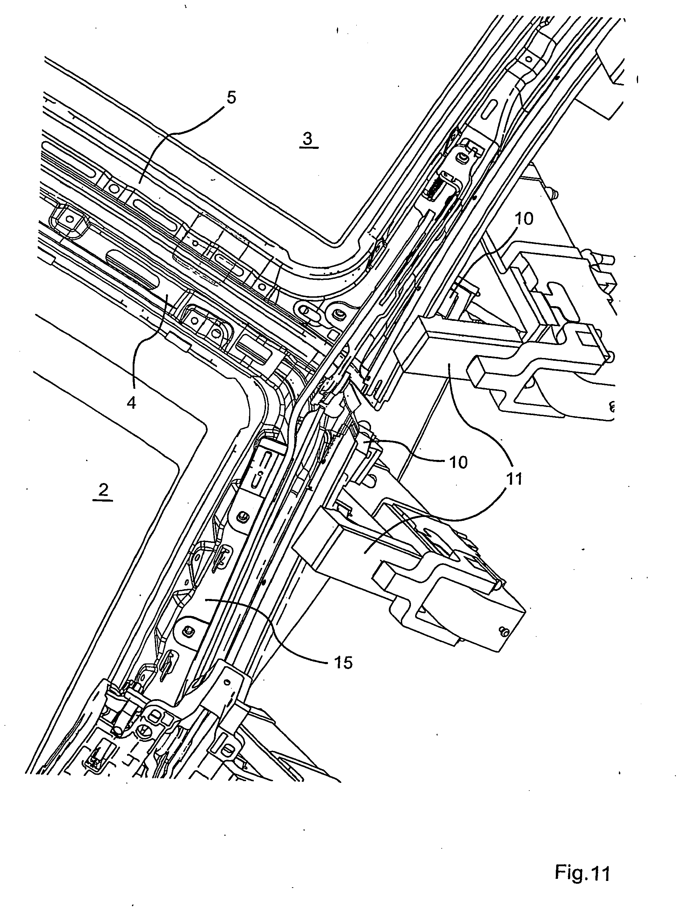

- Fig. 11: eine Detailansicht der unverrückbar eingespannten Rahmenteile von schräg oben,
- Fig. 12: eine schematische und im wesentlichen seitliche Ansicht eines Dachmontagewerkzeugs, bei dem das vorgeschobene Werkzug nach Fig. 10 einen unteren Träger bildet, und bei dem ein oberer Träger seitliche Gestängeteile hält, etwa entsprechend der Stellung nach Fig. 4,
- Fig. 13: ein ähnliche Ansicht wie Fig. 12 während der Anmontage der seitlichen Gestängeteile an einen Rahmenteil,

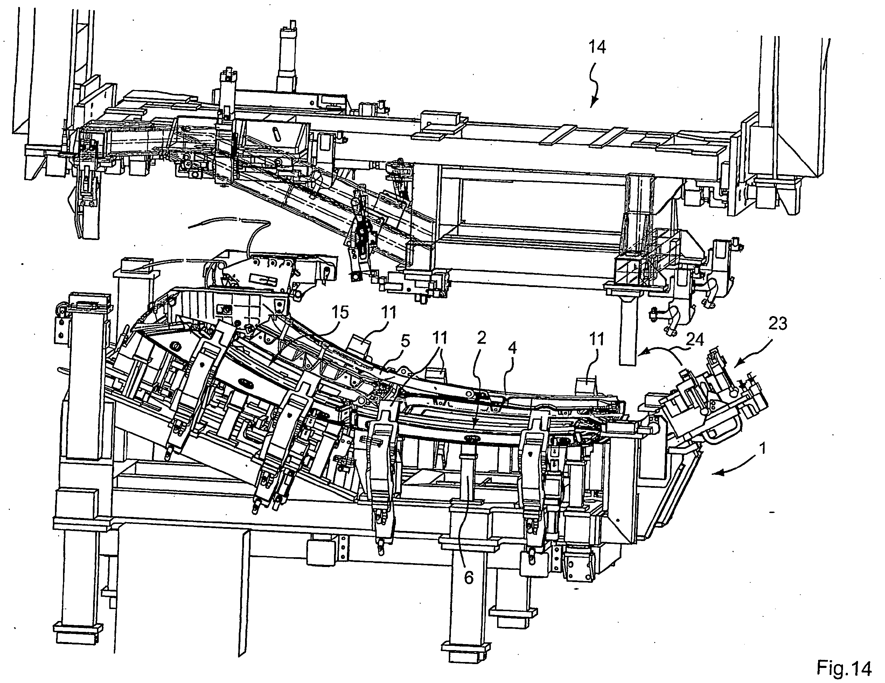

- Fig. 14: eine ähnliche Ansicht wie Fig. 14 bei Aufwärtsbewegen des oberen Trägers nach Abschluss der Montage der Gestängeteile ,

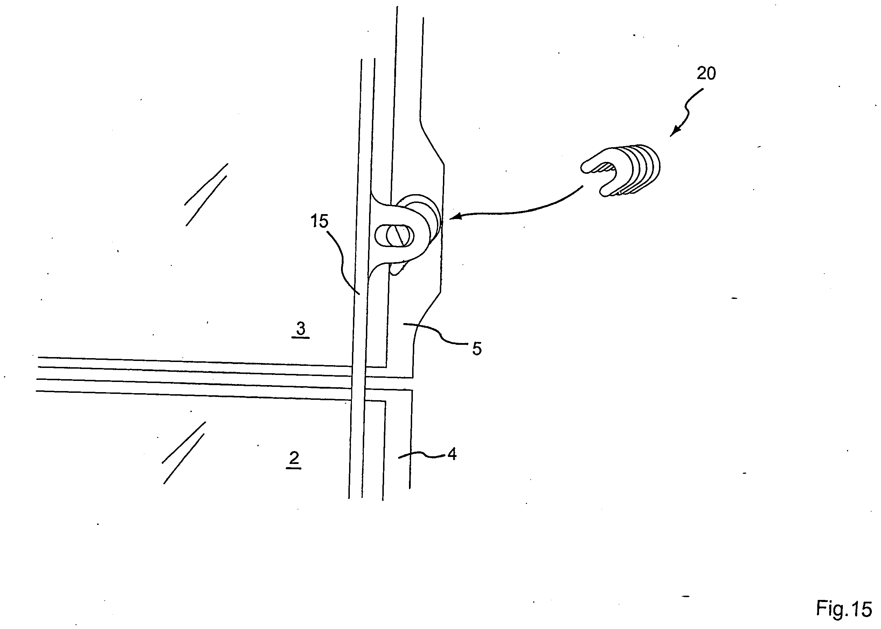

- Fig. 15: eine Detailansicht von oben der Verbindung zwischen Gestängeteilen und Rahmenteil im Werkzeug mit dazwischen gelegten Scheiben eines Schimmspakets .

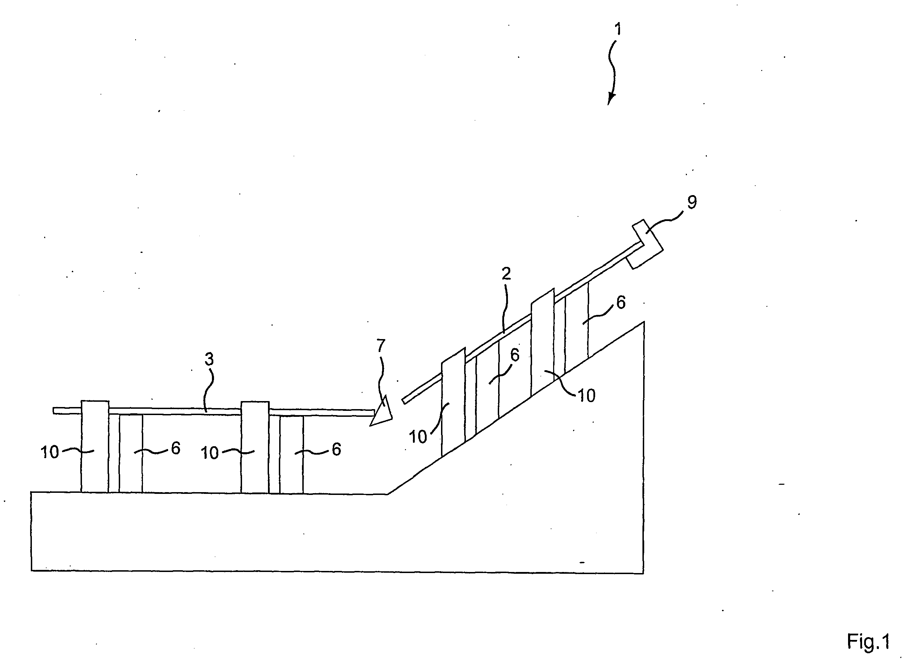

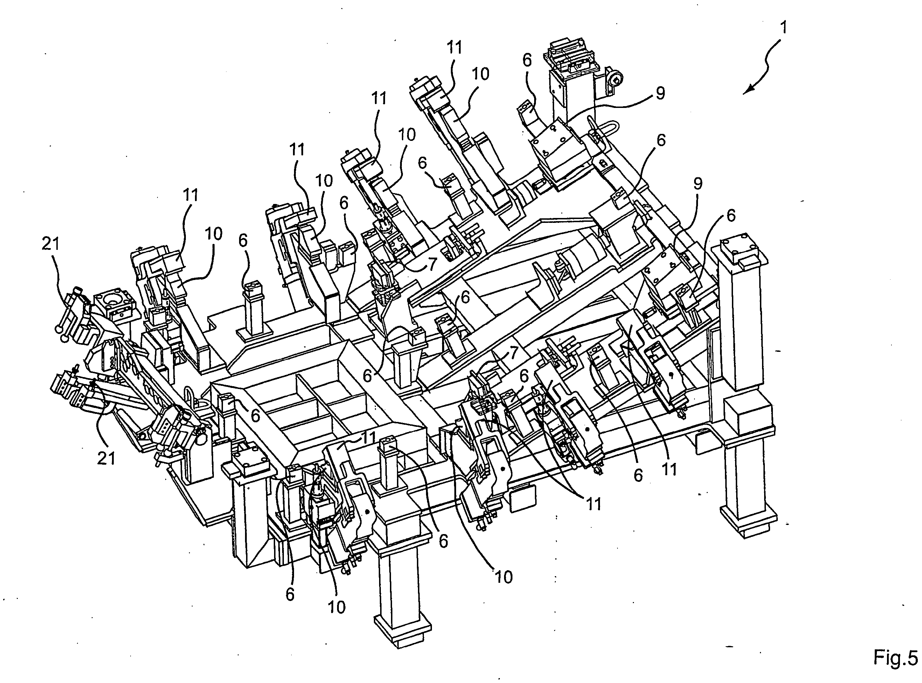

Das in Fig. 1 schematisch und in Fig. 5 im Detail dargestellte Werkzeug 1 weist eine erste Aufnahmeebene für Außenhautteile 2, 3 eines herzustellenden Cabriolet-Daches, und beabstandet darüber eine zweite Aufnahmeebene für diese Außenhautteile 2, 3 unterstützende Rahmenteile 4, 5 auf.

Zumindest ein Außenhautteil ist hier durch eine Heckscheibe 2 gebildet. Ein weiteres Außenhautteil 3 ist hier ebenfalls durch eine Scheibe gebildet, die bei geschlossenem Dach den Insassenraum des Fahrzeugs überdecken soll. Im Ausführungsbeispiel sind genau zwei Außenhautteile 2, 3 dargestellt. Weitere Außenhautteile können jedoch je nach Größe des zu übergreifenden Innenraums vorgesehen sein.

Auch müssen nicht alle Außenhautteile starr ausgebildet sein, sondern neben einer Heckscheibe 2 kann zum Beispiel auch ein Bezug vorgesehen sein, der mit den Rahmenteilen 4, 5 über das erfindungsgemäße Verfahren verbunden wird. Dieses ist daher sowohl für Retractable Hardtops (RHTs) als auch für Softtops einsetzbar.

Die erste Aufnahmeebene, die in der Zeichnung zur Aufnahme der Heckscheibe 2 und der vorgeordneten Scheibe 3 dient, ist definiert durch aufragende Stützen 6, auf die die Scheiben 2, 3 in einer über Kopf gewendeten Stellung, also mit der späteren Außenseite nach unten zeigend, auflegbar sind. Im Trennbereich der beiden Scheiben sind Anschläge 7 vorgesehen, die mit ihrer Dicke den Abstand der Scheiben am montierten Dach vorgeben.

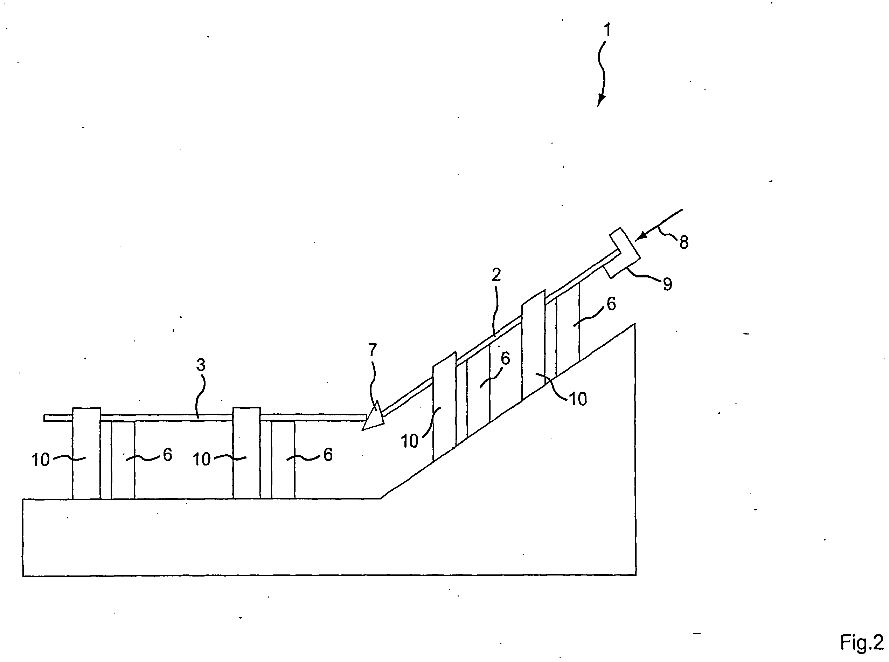

Wie zum Beispiel in Fig. 2 sichtbar ist, sind zumindest für eine der Scheiben 2, 3 Schubglieder 9 vorgesehen, die diese Scheibe 2 mit variablem Verfahrweg in Richtung des Pfeils 8 exakt gegen die Anschläge 7 anlegen und dagegen verspannt halten. Durch den variablen Verfahrweg können dabei herstellungsbedingte Größenunterschiede der Scheibe 2 ausgeglichen werden.

Die Scheiben 2, 3 oder andere Dachaußenhautteile liegen dann zumindest an den Anschlägen 7 in einer praktisch zum Werkzeug 1 toleranzfreien Lage in diesem Werkzeug 1. Dabei können sie abgewinkelt zueinander liegen und den Winkel zueinander aufweisen, der ihrem Winkel zueinander bei geschlössenem Dach im Fahrzeug entspricht. Die Aufnahmeebenen sind hierzu jeweils abgewinkelt.

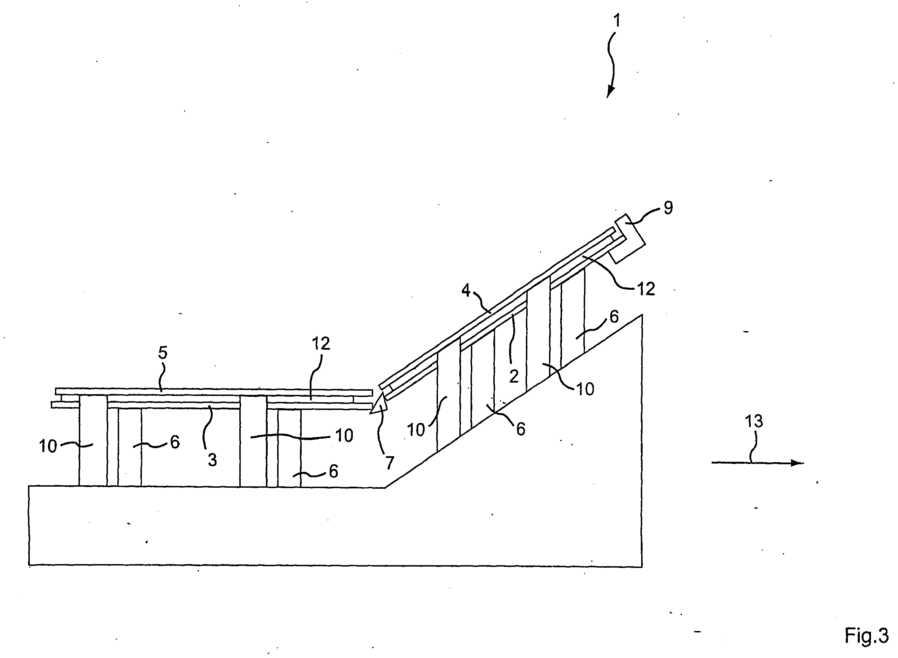

Das Werkzeug 1 umfasst des weiteren oberhalb der ersten eine zweite Aufnahmeebene, die in der Zeichnung zur Aufnahme von mit den Scheiben 2, 3 zu verbindenden Rahmenteilen 4, 5 des Daches dient. Diese zweite Aufnahmeebene ist definiert durch äußere aufragende Stützen 10, auf die Rahmenteile 4, 5 zum Beispiel durch Zuführung mittels eines Roboterarms auflegbar sind. Den Stützen 10 sind weiter beweglichen, hier schwenkbare, Verschlüsse 11 zugeordnet (in Fig. 1 bis 4 nicht eingezeichnet), die über den Rahmenteilen 4, 5 einschwenken und diese daher auf den Stützen 10 ausrichten und sichern. Stützen 10 und Verschlüsse 11 bilden fest fixierende Halterungen für die Rahmenteile 4, 5 aus. Die Rahmenteile 4, 5 sind ebenso exakt zum Werkzeug 1 ausrichtbar wie die Scheiben 2, 3.

Die Scheiben 2, 3 oder hier die Rahmenteile 4, 5 werden vor ihrem Auflegen umlaufend mit einer gleichmäßigen Kleberaupe 12, versehen, die zum Beispiel eine dreieckige Querschnittsgestalt mit einer Höhe von einem bis 1,5 Zentimetern aufweist. Durch das Auflegen der Rahmenteile 3, 4 auf die Stützen 10 wird diese Kleberaupe definiert und aufgrund der Parallellage der Aufnahmeebenen gleichmäßig bis zu einer Höhe von beispielsweise 5 bis 8 Millimetern zusammengedrückt. Während dieses Vorgangs sind die Außenhautteile 2, 3 und die Rahmenteile 4, 5 fest zueinander fixiert. Die Gewichtskraft der Rahmenteile 4, 5 lastet nach Aufsetzen nur noch auf den Säulen 10 und presst dann die Klebung 12 nicht weiter zusammen.

Das Werkzeug 1 mit den daran fixierten Teilen 2, 3, 4, 5 des Daches kann dann in Richtung des Pfeils 13 zum Beispiel auf Schienen oder über Induktionsantrieb und -steuerung verfahren werden und den unteren Träger eines Dachmontagewerkzeugs 14 ausbilden, in dem zumindest eines der Rahmenteile 4, 5 mit seitlichen Gestängeteilen 15 verbunden wird, die bei' fertig montiertem Dach dieses beweglich gegenüber der Fahrzeugkarosserie abstützen.

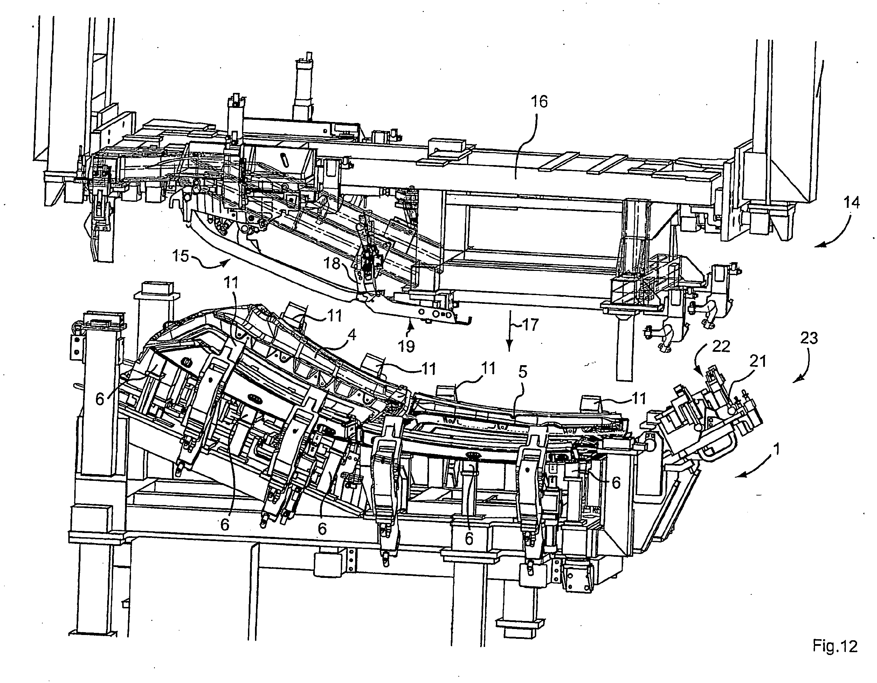

Neben dem unteren Träger, der durch das Werkzeug 1 gebildet ist, umfasst das Werkzeug 14 einen oberen Träger 16, der das Gestänge 15 über Kopf, ansonsten jedoch entsprechend seiner Längs- und Querlage im späteren Fahrzeug entsprechend trägt und der in Richtung des Pfeils 17 absenkbar ist (Fig. 12). Statt des Werkzeugs 1 kann auch dieser obere Träger 16 verfahrbar sein.

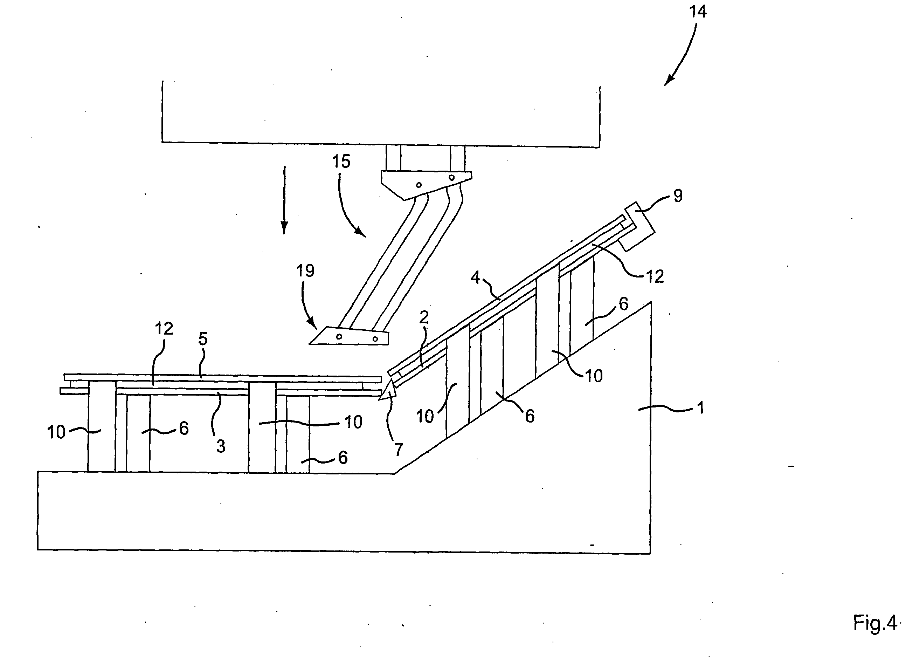

Das Gestänge 15 ist dabei am Träger 16 über Halterungen 18 in exakt der Winkelstellung gehalten, in der es hinterher im Fahrzeug das geschlossene Dach halten wird. Es liegt während der Montage daher eng am Rahmenteil 4 oder 5 an. Die schematische Darstellung nach Fig. 4 mit leicht geöffnetem Parallelogramm im Gestänge 15 ist nur zur besseren Anschauung gewählt.

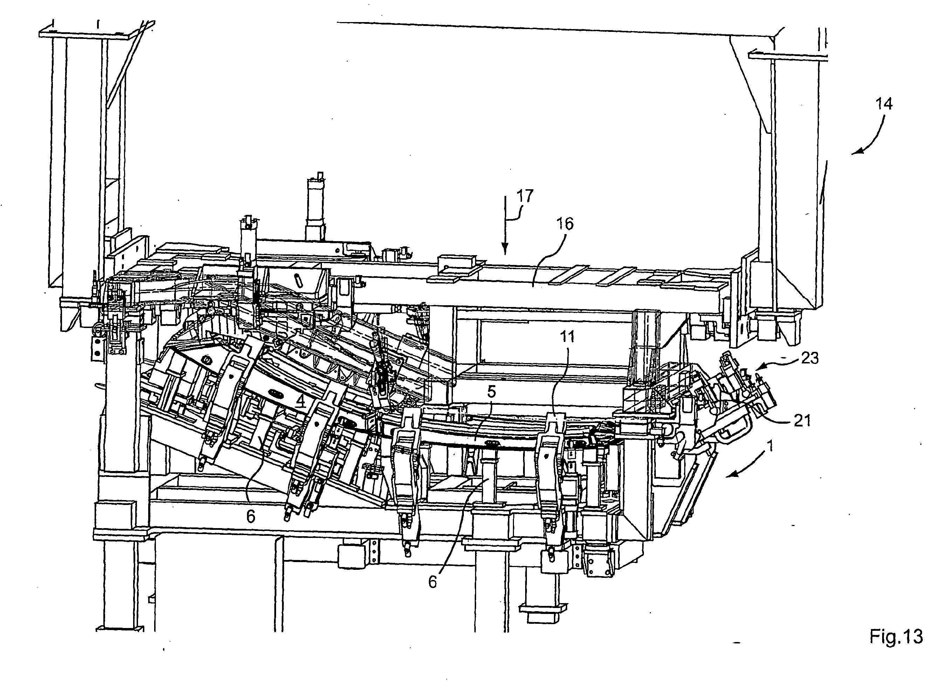

Die Verbindung zwischen dem später oberen Ende 19 des Gestängeteils und dem Rahmenteil 5 und/oder 4 findet in der abgesenkten Stellung des Trägers 16 nach Fig. 13 statt. Da das Gestänge 15 am Träger 16 praktisch toleranzfrei zu den Maßen der Karosserie und die Rahmenteile 4, 5 toleranzfrei im Werkzeug 1 gehalten sind, kann eine eventuelle Fertigungstoleranz zwischen den Teilen je nach Bedarf durch eine angepasste Zahl von Unterlegscheiben 20, sog. Schimmspaketen, ausgeglichen werden. Diese können zudem mit Langlöchern versehen sein, so dass sie in zwei Raumrichtungen einen Toleranzausgleich bewirken können.

Die Toleranzen sind damit innerhalb des Daches selbst ausgeglichen, seine Außenmaße sind exakt maßhaltig zur Karosserie, wodurch die Dachmontage an den Rohbau erheblich erleichtert und beschleunigt ist.

An zumindest einen Rahmenteil 5 sind des weiteren in seiner über Kopf gewendeten Stellung am vorderen Ende Verbindungsorgane anmontierbar, die das fertig montierte geschlossene Dach am Windschutzscheibenrahmen halten.

Hierbei wird zur Ausrichtung der Verbindungsorgane auf den vorderen Rahmenteil 5 eine Schablone 22, die Zentriereinrichtungen 21 für deren Montage an den Rahmenteil 5 umfasst, nahezu toleranzfrei aufgelegt, insbesondere in Richtung des Pfeils 24 aufgeschwenkt. In die Schablone 22 können im aufgelegten und über die Zentrierorgane 21 fixierten Zustand Schrauben oder dergleichen Befestigungsmittel zur passgenauen Festlegung der Verbindungsorgane geführt werden, wobei die Befestigungsmittel in Langlöchern beispielsweise die durch die Schablone 22 vorgegebenne genaue Lage einnehmen können.

Diese Schablone ist Bestandteil eines Dachverschlussmontagewerkzeugs 23, das seinerseits im gezeichneten Ausführungsbeispiel Bestandteil des Werkzeugs 1 zur passgenauen Halterung der Rahmen 4, 5 in über Kopf gewendeter Stellung ist. Dadurch können die Rahmenteile 4, 5 bis zum Ende der Dachmontage ohne Relativbewegung zum Werkzeug 1 eingespannt verbleiben, so dass der Klebstoff 12 eine verlängerte Aushärtungszeit bekommt. Des weiteren ist auch die passgenaue Ausrichtung der Verbindungsorgane der Dachspitze sichergestellt, da die Schablone 22 gegenüber dem Werkzeug 1 passgenau gehalten ist. Zum Einlegen der Scheiben 2, 3 und Rahmenteile 4, 5 kann die Schablone 22 nach unten geschwenkt sein und so die Auflagefläche der Teile freigeben. Die Anzahl der Bearbeitungsschritte ist durch das Verbleiben der Teile 2, 3, 4, 5 im Werkzeug 1 zudem minimiert, was die Effizienz der Herstellung erhöht.

Dadurch, dass das Werkzeug 1 sowohl mit dem Dachmontagewerkzeug 14 verbindbar ist als auch das Dachverschluss-montagewerkzeug 23 umfasst, ist zudem der Werkzeugaufwand im Herstellungsprozess minimiert. Das Werkzeug 1 kann zum Beispiel über Schienen oder induktiv gesteuert dem oberen Träger 16 des Dachmontagewerkzeugs zugeführt werden, wobei die Masse des das Werkzeug 1 haltenden Wagens derart groß ist, dass eine maßhaltige und während des Montageschrittes unbewegte Halterung sichergestellt ist.

Zudem ist das Dachverschlussmontagewerkzeug 23 unabhängig von dem Dachmontagewerkzeug 14 einsetzbar. Beide Montageschritte können daher gleichzeitig oder kurz nacheinander erfolgen, was die Fertigungszeit verkürzt.

In jedem Fall sind alle Montageschritte durch Bedienpersonal in einer ergonomisch günstigen Körperhaltung durchführbar; für keinen Arbeitsgang muss über Kopf gearbeitet werden.

Dabei versteht sich, dass die Herstellungsverfahren nicht auf solche Dächer beschränkt ist, die mehrere Glasscheiben haben. Auch kann zum Beispiel für ein RHT neben der Scheibe 2 und ihrem Rahmenteil 4 auch eine Baueinheit mit einer vormontieren Verbindung zwischen beispielsweise einem Blech und einem Rahmenteil 5 oder zwischen einem Bezugsabschnitt und einem Rahmenteil 5 in das Werkzeug 1 einlegbar sein. Das Verbinden erst im Werkzeug 1 ist dann für diese Teile nicht zwingend.

## Patentansprüche

1. Herstellungsverfahren eines Cabriolet-Daches, das zumindest eine Scheibe (2; 3) und einen die Scheibe abstützenden Rahmenteil (4; 5) umfasst, wobei die Scheibe (2; 3) in einer über Kopf gewendeten Lage auf eine erste Auflageebene eines Werkzeugs (1) aufgelegt wird und der Rahmenteil (4; 5) darüber auf eine zweite, zur ersten beabstandeten Auflageebene des Werkzeugs (1) aufgelegt und dort abgestützt wird,
wobei auf den Rahmenteil (4; 5) oder die Scheibe (2; 3) vor dem Auflegen des Rahmenteils (4; 5) auf die zweite Auflageebene eine Kleberaupe (12) aufgebracht und diese bei aufgelegtem Rahmenteil (4; 5) bis auf den definierten Abstand von Scheibe (2; 3) und Rahmenteil (4; 5) zusammengedrückt wird, und wobei dann dem oder den mit der zumindest einen Scheibe (2; 3) verbundenen, in dem Werkzeug (81) gehaltenen Rahmenteil(en) (4; 5) in einer über Kopf gewendeten Stellung, in der die mindestens eine Scheibe (2; 3) und das mindestens eine Rahmenteil (4; 5) auf den Auflageebenen verbleiben, von oben über Kopf gewendete seitliche Gestängeteile (15) zugeführt werden, die im montierten Dach dieses gegenüber der Fahrzeugkarosserie beweglich halten.

2. Verfahren nach Anspruch 1,
**dadurch gekennzeichnet,**
**dass** die oder eine Scheibe (2; 3) auf der ersten Auflageebene von Schubgliedern (9) bis zu zumindest einem Anschlag (7) verschoben (8) wird.

3. Verfahren nach Anspruch 1,
**dadurch gekennzeichnet,**
**dass** die Scheibe (2; 3) und das Rahmenteil (4; 5), die miteinander verbunden sind, definiert verfahrbar und einem Dachmontagewerkzeug (14) zuführbar sind, insbesondere über Schienen.

4. Verfahren nach Anspruch 1,
**dadurch gekennzeichnet,**
**dass** der Öffnungswinkel des Gestänges (15) zu dem zumindest einen Rahmenteil (4; 5) dem Winkel im Fahrzeug bei geschlossenem Dach entspricht.

5. Verfahren nach Anspruch 1 oder 4,
**dadurch gekennzeichnet,**
**dass** bei der Verbindung von Gestänge (15) und Rahmenteil (4; 5) das Gestänge (15) in einem oberen Träger (16) und der Rahmenteil (4; 5) in einem von dem Werkzeug (1) gebildeten unteren Träger jeweils nahezu toleranzfrei gehalten sind und zumindest ein Träger (16; 1) definiert zur Herstellung der Verbindung zwischen Gestänge und Rahmenteil auf den anderen zu bewegt wird, wobei in die Verbindung ein oder mehrere Toleranzausgleichselemente (20) einsetzbar sind.

6. Verfahren nach einem der Ansprüche 1 bis 5,
**dadurch gekennzeichnet,**
**dass** an den Rahmenteil (4; 5) in der über Kopf gewendeten Stellung Verbindungsorgane anmontiert werden, die das fertig montierte geschlossene Dach am Windschutzscheibenrahmen halten, wobei zur Ausrichtung der Verbindungsorgane auf den Rahmenteil (4; 5) eine an ein Dachverschlüssmontagewerkzeug (23) anmontierte Schablone (22) nahezu toleranzfrei aufgelegt, insbesondere aufgeschwenkt, wird.

7. Dachmontagewerkzeug (14) für die Herstellung eines Cabriolet-Daches, das im fertigen Dach zumindest eine Scheibe und einen die Scheibe (2; 3) abstützenden Rahmenteil (4; 5) umfasst, umfassend ein Werkzeug (1), das zur Unterstützung der Verbindung der Scheibe (2; 3) und des Rahmenteils (4; 5) vorgesehen ist und eine erste Auflageebene zur Abstützung der zumindest einen Scheibe (2; 3) in einer über Kopf gewendeten Lage und darüber eine zweite Auflageebene zur beabstandeten Abstützung des ebenfalls gewendeten Rahmenteils (4; 5) umfasst, wobei das Dachmontagewerkzeug (14) einen von dem Werkzeug (1) ausgebildeten unteren Träger (1) zur Aufnahme des Rahmenteils (4; 5) in der über-Kopf-gewendeten Stellung und einen oberen Träger (16) zur Aufnahme von über-Kopf-gewendeten seitlichen Gestängeteilen (15) umfasst, die im montierten Dach dieses gegenüber der Fahrzeugkarosserie beweglich halten.

8. Dachmontagewerkzeug nach Anspruch 7,
**dadurch gekennzeichnet,**
**dass** in diesem der Winkel des Gestänges (15) zu dem zumindest einen Rahmenteil (4; 5) dem Winkel im Fahrzeug bei geschlossenem Dach entspricht.

9. Dachmontagewerkzeug nach einem der Ansprüche 7 oder 8,
**dadurch gekennzeichnet,**
**dass** das Gestänge (15) in dem oberen Träger (16) und der Rahmenteil (4; 5) in dem unteren Träger (1) jeweils nahezu toleranzfrei gehalten sind und zumindest eine Halterung definiert zur Herstellung der Verbindung zwischen Gestänge (15) und Rahmenteil (4; 5) auf die andere zu bewegbar ist.

10. Dachmontagewerkzeug nach Anspruch 9,
**dadurch gekennzeichnet,**
**dass** ein Sortiment von unterschiedlich bemaßten Toleranzausgleichselementen (20) für die Verbindung zwischen Gestänge (15) und Rahmenteil (4; 5) vorgesehen ist.

11. Dachmontagewerkzeug nach Anspruch 10,
**dadurch gekennzeichnet,**
**dass** Toleranzausgleichselemente (20) durch mit Langlöchern versehene Zwischenscheiben unterschiedlicher Dicken, sog. Schimmspakete, gebildet sind.

12. Dachmontagewerkzeug nach Anspruch 7,
**dadurch gekennzeichnet,**
**dass** die zweite Auflageebene mit seitlichen, zur Freigabe einer Durchgriffsstellung auf die erste Auflageebene zumindest bereichsweise nach außen bewegbaren Haltern (10; 11) gebildet ist.

13. Dachmontagewerkzeug nach einem der Ansprüche 7 oder 12,
**dadurch gekennzeichnet,**
**dass** die erste Auflageebene einen gegenüber einer Horizontalen schräg gestellten, an seiner tiefsten Stelle mit einem Anschlag (7) versehenen Bereich umfasst.

14. Dachmontagewerkzeug nach Anspruch 13,
**dadurch gekennzeichnet,**
**dass** die erste Auflageebene an dem schräg gestellten Bereich Schubglieder (9) umfasst, die eine darauf gehaltene Scheibe (2) bis zu dem zumindest einen Anschlag (7) verschieben.

15. Dachmontagewerkzeug nach einem der Ansprüche 7 und 12 bis 14,
**dadurch gekennzeichnet,**
**dass** die erste Auflageebene Abstützungen (6) für mehrere Scheiben (2; 3) umfasst, die gegeneinander entsprechend der Abwinklung der Scheiben im Fahrzeug bei geschlossenem Dach abgewinkelt sind.

16. Dachmontagewerkzeug nach einem der Ansprüche 7 und 12 bis 15,
**dadurch gekennzeichnet,**
**dass** der Abstand der beiden Auflageebenen, senkrecht zu diesen gemessen, zwischen 5 und 9 Millimetern beträgt.

17. Dachmontagewerkzeug nach einem der Ansprüche 7 und 12 bis 16,
**dadurch gekennzeichnet,**
**dass** dieses definiert, insbesondere über Schienen, verfahrbar ist.

18. Dachmontagewerkzeug nach einem der Ansprüche 7 bis 17, **gekennzeichnet durch** ein Dachverschlussmontagewerkzeug (23), das den unteren Träger zur Aufnahme des Rahmenteils (4; 5) in einer über-Kopf-gewendeten Stellung und eine Schablone (22) zur Aufnahme von in montierter Stellung das geschlossene Dach am Windschutzscheibenrahmen haltenden Verbindungsorganen umfasst.

19. Dachmontagewerkzeug nach Anspruch 18,
**dadurch gekennzeichnet,**
**dass** zur Ausrichtung der Verbindungsorgane die Schablone (22) auf den Rahmenteil (4; 5) nahezu toleranzfrei auflegbar und hierfür mit Zentriereinrichtungen versehen ist.

20. Dachmontagewerkzeug nach Anspruch 19,
**dadurch gekennzeichnet,**
**dass** die Schablone (22) auf ein in späterer Fahrtrichtung vorderes Ende des Rahmenteils (4; 5) aufschwenkbar ist.

## Claims

1. Production method for a cabriolet roof which comprises at least one panel (2; 3) and a frame part (4; 5) supporting the panel, the panel (2; 3) being positioned in an upside-down position on a first bearing plane of a tool (1) and the frame part (4; 5) being positioned thereabove on a second bearing plane of the tool (1) spaced apart from the first, and being supported there, an adhesive bead (12) being applied to the frame part (4; 5) or the panel (2; 3) before positioning the frame part (4; 5) on the second bearing plane and said adhesive bead being compressed when the frame part (4; 5) is positioned as far as the defined distance from the panel (2; 3) and the frame part (4; 5), and lateral linkage parts (15) turned upside-down then being moved from above towards the frame part(s) (4; 5) connected to the at least one panel (2; 3) and held in the tool (81), in an upside-down position in which the at least one panel (2; 3) and the at least one frame part (4; 5) remain on the bearing planes, when the roof is installed said linkage parts holding said roof movably relative to the vehicle bodywork.

2. Method according to Claim 1, **characterized in that** the or a panel (2; 3) is displaced (8) on the first bearing plane by pushing members (9) as far as at least one stop (7).

3. Method according to Claim 1, **characterized in that** the panel (2; 3) and the frame part (4; 5) which are connected together, may be moved in a defined manner and may be moved towards a roof installation tool (14), in particular via rails.

4. Method according to Claim 1, **characterized in that** the opening angle of the linkage (15) for the at least one frame part (4; 5) corresponds to the angle in the vehicle when the roof is closed.

5. Method according to Claim 1 or 4, **characterized in that** when connecting the linkage (15) and the frame part (4; 5), the linkage (15) is held in an upper carrier (16) and the frame part (4; 5) is held in a lower carrier formed by the tool (1), in each case virtually without tolerances, and to produce the connection between the linkage and the frame part at least one carrier (16; 1) is moved in a defined manner towards the other, one or more tolerance compensation elements (20) being able to be inserted into the connection.

6. Method according to one of Claims 1 to 5, **characterized in that** connecting members are mounted on the frame part (4; 5) in the upside-down position, said connecting members holding the fully installed closed roof against the windscreen frame, a guide (22) mounted on a roof closure installation tool (23) being positioned, in particular pivoted, onto the frame part (4; 5) virtually without tolerances, for aligning the connecting members.

7. Roof installation tool (14) for producing a cabriolet roof which comprises in the finished roof at least one panel and a frame part (4; 5) supporting the panel (2; 3), comprising a tool (1) which is provided for assisting the connection of the panel (2; 3) and the frame part (4; 5) and comprises a first bearing plane for supporting the at least one panel (2; 3) in an upside-down position and a second bearing plane thereabove for supporting at a distance the frame part (4; 5), which is also turned over, the roof installation tool (14) comprising a lower carrier (1) formed by the tool (1) for receiving the frame part (4; 5) in the upside-down position and an upper carrier (16) for receiving upside-down lateral linkage parts (15) which, when the roof is installed, hold said roof movably relative to the vehicle bodywork.

8. Roof installation tool according to Claim 7, **characterized in that** in said roof installation tool, the angle of the linkage (15) for the at least one frame part (4; 5) corresponds to the angle in the vehicle when the roof is closed.

9. Roof installation tool according to one of Claims 7 or 8, **characterized in that** the linkage (15) is held in the upper carrier (16) and the frame part (4; 5) is held in the lower carrier (1), in each case virtually without tolerances, and to produce the connection between the linkage (15) and the frame part (4; 5) at least one holder may be moved towards the other in a defined manner.

10. Roof installation tool according to Claim 9, **characterized in that** an assortment of tolerance compensation elements (20) of varying dimensions is provided for the connection between the linkage (15) and the frame part (4; 5).

11. Roof installation tool according to Claim 10, **characterized in that** tolerance compensation elements (20) are formed by washers of different thicknesses, so-called shim packs, provided with slots.

12. Roof installation tool according to Claim 7, **characterized in that** the second bearing plane is formed by lateral holders (10; 11) which are able to be moved at least partially outwardly to release a gripped position towards the first bearing plane.

13. Roof installation tool according to one of Claims 7 or 12, **characterized in that** the first bearing plane comprises a region which is positioned obliquely relative to a horizontal and which is provided at its lowest point with a stop (7).

14. Roof installation tool according to Claim 13, **characterized in that** the first bearing plane comprises pushing members (9) on the obliquely positioned region, which displace a panel (2) held thereon as far as the at least one stop (7).

15. Roof installation tool according to one of Claims 7 and 12 to 14, **characterized in that** the first bearing plane comprises supports (6) for a plurality of panels (2; 3), which are angled back relative to one another according to the angle of the panels in the vehicle when the roof is closed.

16. Roof installation tool according to one of Claims 7 and 12 to 15, **characterized in that** the distance between the two bearing planes, measured perpendicularly thereto, is between 5 and 9 millimetres.

17. Roof installation tool according to one of Claims 7 and 12 to 16, **characterized in that** said roof installation tool may be moved in a defined manner, in particular via rails.

18. Roof installation tool according to one of Claims 7 to 17, **characterized by** a roof closure installation tool (23) which comprises the lower carrier for receiving the frame part (4; 5) in an upside-down position and a guide (22) for receiving connecting members holding the closed roof against the windscreen frame in the installed position.

19. Roof installation tool according to Claim 18, **characterized in that** for aligning the connecting members, the guide (22) is able to be positioned virtually without tolerances on the frame part (4; 5) and to this end is provided with centring devices.

20. Roof installation tool according to Claim 19, **characterized in that** the guide (22) may be pivoted onto a front end of the frame part (4; 5) in the subsequent direction of travel.

## Revendications

1. Procédé de fabrication d'un toit de cabriolet, qui comprend au moins un panneau (2; 3) et une partie de cadre (4; 5) supportant le panneau, le panneau (2; 3) étant placé dans une position retournée à l'envers sur un premier plan d'appui d'un outil (1) et la partie de cadre (4; 5) étant placée par-dessus sur un deuxième plan d'appui de l'outil (1) espacé du premier plan d'appui et y étant supportée,
un cordon de colle (12) étant appliqué sur la partie de cadre (4; 5) ou le panneau (2; 3) avant de placer la partie de cadre (4; 5) sur le deuxième plan d'appui, et ce cordon de colle étant pressé lors de la mise en place de la partie de cadre (4; 5) jusqu'à la distance définie entre le panneau (2; 3) et la partie de cadre (4; 5), et ensuite des parties de tringlerie latérales (15) retournées à l'envers par le dessus étant acheminées à la ou aux parties de cadre (4; 5) connectée(s) à l'au moins un panneau (2; 3) et maintenue(s) dans l'outil (81), dans une position retournée à l'envers dans laquelle l'au moins un panneau (2; 3) et l'au moins une partie de cadre (4; 5) restent sur les plans d'appui, les parties de tringlerie (15) maintenant mobile le toit par rapport à la carrosserie du véhicule dans l'état monté du toit.

2. Procédé selon la revendication 1,
**caractérisé en ce que**
le ou un panneau (2; 3) est poussé (8) sur le premier plan d'appui par des organes de poussée (9) jusqu'à au moins une butée (7).

3. Procédé selon la revendication 1,
**caractérisé en ce que**
le panneau (2; 3) et la partie de cadre (4; 5) qui sont connectés l'un à l'autre, peuvent être déplacés de manière définie et acheminés à un outil de montage du toit (14), en particulier par le biais de rails.

4. Procédé selon la revendication 1,
**caractérisé en ce que**
l'angle d'ouverture de la tringlerie (15) avec l'au moins une partie de cadre (4; 5) correspond à l'angle dans le véhicule lorsque le toit est fermé.

5. Procédé selon la revendication 1 ou 4,
**caractérisé en ce que**
lors de la connexion de la tringlerie (15) et de la partie de cadre (4; 5), la tringlerie (15) est maintenue dans un support supérieur (16) et la partie de cadre (4; 5) dans un support inférieur formé par l'outil (1), à chaque fois pratiquement sans tolérance, et au moins un support (16; 1) pour créer la connexion entre la tringlerie et la partie de cadre est déplacé vers l'autre de manière définie, un ou plusieurs éléments de compensation des tolérances (20) pouvant être insérés dans la connexion.

6. Procédé selon l'une quelconque des revendications 1 à 5,
**caractérisé en ce que**
sur la partie de cadre (4; 5) dans la position retournée à l'envers, des organes de connexion sont montés et retiennent sur le cadre du pare-brise le toit fermé et monté de manière définitive, un gabarit (22) monté sur un outil de montage de fermeture de toit (23) étant placé pratiquement sans tolérance, en particulier par pivotement, sur la partie de cadre (4; 5) pour orienter les organes de connexion.

7. Outil de montage du toit (14) pour la fabrication d'un toit de cabriolet, qui comprend dans l'état fini du toit au moins un panneau et une partie de cadre (4; 5) supportant le panneau (2; 3), comprenant un outil (1), qui est prévu pour supporter la connexion du panneau (2; 3) et de la partie de cadre (4; 5) et un premier plan d'appui pour supporter l'au moins un panneau (2; 3) dans une position retournée à l'envers et par-dessus lui un deuxième plan d'appui pour supporter, de manière espacée, la partie de cadre (4; 5) également retournée à l'envers, l'outil de montage du toit (14) comprenant un support (1) inférieur réalisé par l'outil (1) pour recevoir la partie de cadre (4; 5) dans la position retournée à l'envers et un support supérieur (16) pour recevoir des parties de tringlerie (15) latérales retournées à l'envers, qui maintiennent mobile le toit par rapport à la carrosserie du véhicule dans l'état monté du toit.

8. Outil de montage du toit selon la revendication 7,
**caractérisé en ce que**
dans celui-ci, l'angle de la tringlerie (15) avec l'au moins une partie de cadre (4; 5) correspond à l'angle dans le véhicule lorsque le toit est fermé.

9. Outil de montage du toit selon l'une quelconque des revendications 7 ou 8,
**caractérisé en ce que** la tringlerie (15) est maintenue dans le support supérieur (16) et la partie de cadre (4; 5) dans le support inférieur (1) à chaque fois pratiquement sans tolérance, et au moins une fixation pour réaliser la connexion entre la tringlerie (15) et la partie de cadre (4; 5) peut être avancée vers l'autre de manière définie.

10. Outil de montage du toit selon la revendication 9,
**caractérisé en ce**
**qu'**il est prévu une gamme d'éléments de compensation des tolérances (20) de dimensions différentes, pour la connexion entre la tringlerie (15) et la partie de cadre (4; 5).

11. Outil de montage du toit selon la revendication 10,
**caractérisé en ce que**
des éléments de compensation des tolérances (20) sont formés par des panneaux intermédiaires pourvus trous oblongs, ayant des épaisseurs différentes, appelés paquets de rondelles.

12. Outil de montage du toit selon la revendication 7,
**caractérisé en ce que** le deuxième plan d'appui est formé avec des supports (10; 11) latéraux, déplaçables au moins en partie vers l'extérieur pour libérer une position de préhension sur le premier plan d'appui.

13. Outil de montage du toit selon l'une quelconque des revendications 7 ou 12,
**caractérisé en ce que**
le premier plan d'appui comprend une région oblique par rapport à l'horizontale, pourvue à son emplacement le plus profond d'une butée (7).

14. Outil de montage du toit selon la revendication 13,
**caractérisé en ce que**
le premier plan d'appui comprend des organes de poussée (9) sur la région oblique, lesquels déplacent un panneau (2) placé sur celui-ci jusqu'à l'au moins une butée (7).

15. Outil de montage du toit selon l'une quelconque des revendications 7 et 12 à 14,
**caractérisé en ce que**
le premier plan d'appui comprend des supports (6) pour plusieurs panneaux (2; 3) qui sont inclinés les uns par rapport aux autres en fonction de l'inclinaison des panneaux dans le véhicule lorsque le toit est fermé.

16. Outil de montage du toit selon l'une quelconque des revendications 7 et 12 à 15,
**caractérisé en ce que**
la distance entre les deux plans d'appui, mesurée perpendiculairement à ceux-ci, vaut entre 5 et 9 millimètres.

17. Outil de montage du toit selon l'une quelconque des revendications 7 et 12 à 16,
**caractérisé en ce que**
celui-ci est déplaçable de manière définie, en particulier par le biais de rails.

18. Outil de montage du toit selon l'une quelconque des revendications 7 à 17, **caractérisé par** un outil de montage de fermeture du toit (23), qui comprend le support inférieur pour recevoir la partie de cadre (4; 5) dans une position retournée à l'envers et un gabarit (22) pour recevoir des organes de connexion retenant le toit fermé contre le cadre de pare-brise dans la position montée.

19. Outil de montage du toit selon la revendication 18,
**caractérisé en ce que**
pour l'orientation des organes de connexion, le gabarit (22) peut être placé sur la partie de cadre (4; 5) pratiquement sans tolérance et est à cet effet pourvu de dispositifs de centrage.

20. Outil de montage du toit selon la revendication 19,
**caractérisé en ce que**
le gabarit (22) peut être redressé par pivotement sur une extrémité avant, dans la direction de conduite ultérieure, de la partie de cadre (4; 5).
